# EUROPEAN PATENT SPECIFICATION

(11) **EP 3 460 095 B1**
(45) Date of publication and mention of the grant of the patent: **30.03.2022**
(21) Application number: 18195587.3
(22) Date of filing: 20.09.2018
(51) Int. Cl.: C23C 18/16, C23C 18/50, C23C 18/54, F01C 21/08, F16J 9/26, F16C 33/12

(54) **SLIDING MEMBER**
GLEITELEMENT
ÉLÉMENT COULISSANT

(30) Priority: 25.09.2017 JP 2017184112
(43) Date of publication of application: 27.03.2019
(73) Proprietor: Kabushiki Kaisha Riken, Tokyo 102-8202 (JP)
(72) Inventor: FUJITA, Satoru, Tokyo, 102-8202 (JP); UEDA, Terushige, Tokyo, 102-8202 (JP)
(74) Representative: Scott, Stephen John

(56) References cited:
- EP-A2- 0 289 838
- JP-A- H05 141 533
- US-A- 5 573 390
- US-A- 6 146 702
- YOUNAN M M ET AL: "Effect of heat treatment on electroless ternary nickel-cobalt-phosphorus alloy", JOURNAL OF APPLIED ELECTROCHEMISTRY APRIL 2002 KLUWER ACADEMIC PUBLISHERS NL, vol. 32, no. 4, April 2002 (2002-04), pages 439-446, XP002786921, DOI: 10.1023/A:1016343910202
- DATABASE COMPENDEX [Online] ENGINEERING INFORMATION, INC., NEW YORK, NY, US; April 2002 (2002-04), YOUNAN M M ET AL: "Effect of heat treatment on electroless ternary nickel-cobalt-phosphorus alloy", Database accession no. E2002357058466 & YOUNAN M M ET AL: "Effect of heat treatment on electroless ternary nickel-cobalt-phosphorus alloy", JOURNAL OF APPLIED ELECTROCHEMISTRY APRIL 2002 KLUWER ACADEMIC PUBLISHERS NL, vol. 32, no. 4, April 2002 (2002-04), pages 439-446, DOI: 10.1023/A:1016343910202

## Description

### TECHNICAL FIELD

The present disclosure relates to a sliding member having a base material, a Ni-P plating film formed on the base material, and a Ni-P-Co plating film formed on the Ni-P plating film.

### BACKGROUND

A compressor for a car air conditioner or the like includes an opposite material such as a cylinder, and a sliding member such as a vane, which has a sliding surface that slides on the opposite material. In addition, for the opposite material and the sliding member, an aluminum alloy is often used for the purpose of weight saving. However, there is a problem that on the sliding surface, aluminum alloys directly slide on each other, and abrasion and seizure occur between the sliding member and the opposite material. As a countermeasure to this problem, the surface of the sliding member is coated with a plating film to avoid direct sliding of the aluminum alloys on each other.

For example, as for a vane for a rotary type compressor for a car air conditioner, the surface of a base material made from an aluminum alloy is coated with a Ni plating film to avoid direct sliding of the aluminum alloys on each other. Examples of the Ni plating film include: an electroless Ni-P plating film containing P, with the balance being Ni and unavoidable impurities; an electroless Ni-B plating film containing B, with the balance being Ni and unavoidable impurities; an electroless Ni-P-B plating film containing P and B, with the balance being Ni and unavoidable impurities; and an electroless Ni-P-Co-W plating film containing P, Co and W, with the balance being Ni and unavoidable impurities.

The electroless Ni-P plating treatment is suitable for forming a film at a high speed, because the plating bath is generally stable, and is widely used also in industrial fields. JPS6432087A(PTL 1) proposes that an electroless Ni-P plating film having a P content of 8 to 10% is formed on an outer surface of a vane or on an inner peripheral surface of a cylinder block, and then the hardness of the film is increased to HV 700 to 800 by heat treatment.

In addition, it is known that electroless Ni-B plating treatment can provide a film having a higher hardness than the film formed by the electroless Ni-P plating treatment. JP201530885A (PTL 2) proposes a method for obtaining an electroless Ni-B plating film having a Vickers hardness of HV 850 or higher, even with no heat treatment applied thereto. Furthermore, JPH8158058A (PTL 3) proposes a method for obtaining an electroless Ni-P-B plating film having a Vickers hardness of HV 800 or higher by heat treatment in such a temperature region as not to affect the hardness of the base material.

In addition, JP2007162069A (PTL 4) proposes an electroless Ni-P-Co-W plating film having a high hardness in a temperature region from room temperature (25°C) to high temperature (200 to 400°C). In PLT 4, 1 mass% or more and 50 mass% or less Co is added to the Ni-P plating film. It has been reported that a high temperature hardness is thereby improved, and a room temperature hardness can also be improved without adversely affecting the high temperature hardness by adding W in the range of 1 mass% or more and 20 mass% or less.

NPL 1 discloses deposition of ternary Ni-Co-P alloy coatings on different substrates by an electroless process for applications which require hardness, wear resistance and corrosion resistance.

PTL 5 discloses an aluminum alloy piston having a ring groove on which a Ni-P alloy is formed for improved wear resistance

### CITATION LIST

### Patent Literature

PTL 1: JPS6432087A
PTL 2: JP201530885A
PTL 3: JPH8158058A
PTL 4: JP2007162069A
PTL 5: JPH05141533

### Non-Patent Literature

NPL 1: Younan M. M. et al.: "Effect of heat treatment on electroless ternary nickel-cobalt-phosphorus alloy", J. of Appl. Electrochem., NL, DOI: 10.1023/A:1016343910202, vol. 32, no. 4, April 2002, p.439/46:

### SUMMARY

In PLT 1, the Vickers hardness of the Ni-P plating film before being subjected to heat treatment is approximately HV 550, and in order to obtain the Vickers hardness of HV 650 to 850 which is practically required, the heat treatment in a high temperature region of 200°C or higher is necessary. However, in the case where a heat treatment hardening type aluminum alloy or a resin is used as a base material, the heat treatment in such a high temperature region results in lowering the strength of the base material. For this reason, the film in a real vane for a rotary type compressor for a car air conditioner has not been subjected to the heat treatment in the high temperature region, and the hardness of the film reaches only approximately HV 550 at present. If the hardness of the film is such a low, the film cannot provide sufficient abrasion resistance to the vane.

In addition, in PLT 2, an electroless Ni-B plating film having a Vickers hardness of HV 850 or higher can be obtained without being subjected to the heat treatment. In addition, in PLT 3, an electroless Ni-P-B plating film having a Vickers hardness of HV 800 or higher can be obtained by heat treatment in a temperature region which does not remarkably lower the hardness of the base material. However, the plating treatment using B as in PLTs 2 and 3 has the following problems. Specifically, in the plating treatment using B, a plating liquid containing a boron compound such as sodium borohydride, diethylamine borane or dimethylamine borane is used as a reducing agent. These boron compounds are difficult to be handled, and impair stability when added to the plating liquid. For example, sodium borohydride is hydrolyzed in an acidic aqueous solution, and BH₄⁻ binds to Ni₂⁺ to form a sparingly-soluble salt; and accordingly sodium borohydride can be applied only to a strong alkaline solution. In addition, diethylamine borane is a substance sparingly soluble in water. In addition, dimethylamine borane causes self-decomposition by a hydrolysis reaction in a low pH environment at pH 5 or lower, and accordingly the consumption of the reducing agent, which is not involved in the formation of the plating film, occurs, as a result. In this way, in the plating treatment using B, handling of the reducing agent is difficult, and accordingly the control of the plating liquid becomes difficult. In addition, as the reducing agent is decomposed, Ni precipitates on places other than the surface of the sliding member. In addition, if precipitated Ni drifts in the plating liquid and adheres to the surface of the sliding member, a salient is formed on the surface thereof, and causes defects in roughness; and accordingly the sliding member having a desired surface roughness cannot be stably obtained.

In addition, in PLT 4, Co and W are added to a Ni-P plating film to increase the hardness of the film, in order to obtain a sliding member excellent in sliding characteristics. However, if it is assumed that this film is applied to a sliding member used under a high load environment in which a local load is applied to a sliding surface as in the vane for the rotary type compressor for the car air conditioner, it is required to further improve the abrasion resistance of the sliding member.

In light of these considerations, the present disclosure aims to provide a sliding member having an abrasion resistance further improved by a plating film not containing B, and which prevents contamination of a plating liquid by an element contained in a base material of the sliding member.

The present inventors have made studies so as to solve the above described problems, and have obtained the following idea. Specifically, if the elastic modulus of a sliding member is low, deformation of the sliding member increases, when the sliding member is pressed against the opposite material, and accordingly the sliding area between the sliding member and the opposite material becomes large. As a result, the abrasion loss of the sliding member increases. Accordingly, a sliding member coated with a film having a high elastic modulus has high abrasion resistance. As a result of having made extensive investigations in order to develop a film having a high elastic modulus, the present inventors have found that the elastic modulus is enhanced by an addition of a predetermined amount of Co to a Ni plating film having a low P content (hereinafter referred to as "low P type"). Then, the present inventors have prepared a sliding member having a surface of the base material coated with the film, have confirmed that the abrasion resistance of the sliding member is further improved, and have accomplished the present disclosure.

The invention is characterized by the appended claims. The present disclosure has been accomplished on the basis of the above described findings, and the summary and the constitution of the present disclosure are as follows.
(1) A sliding member including: a base material; a Ni-P plating film formed on the base material; and a Ni-P-Co plating film formed on the Ni-P plating film, wherein
   the base material is aluminum or an aluminum alloy, or is an Al-Si based alloy containing a transition metal element and having a Rockwell hardness of HRB 80 or higher,
   the Ni-P plating film has a thickness of 1 µm or more and 5 µm or less, and
   the Ni-P-Co plating film has a thickness of 3 µm or more and 30 µm or less and contains 3.4 mass% or more and less than 10.0 mass% Co and 0.05 mass% or more and 5.0 mass% or less P, with the balance being Ni and unavoidable impurities.
(2) The sliding member according to (1) above, wherein the Ni-P-Co plating film has an elastic modulus of 80 GPa or larger and 160 GPa or smaller.
(3) The sliding member according to any one of (1) or (2) above, wherein the Ni-P-Co plating film has a Vickers hardness of HV 650 or higher and HV 850 or lower.
(4) The sliding member according to any one of (1) to (3) above, being a vane for a compressor.
(5) The sliding member according to any one of (1) to (3) above, being a valve retainer of a valve mechanism of an internal combustion engine.

According to the present disclosure, the sliding member according to (1) has an abrasion resistance that is further improved by a plating film not containing B, and can prevent contamination of a plating liquid by an element contained in a base material of the sliding member.

### BRIEF DESCRIPTION OF THE DRAWINGS

In the accompanying drawings:

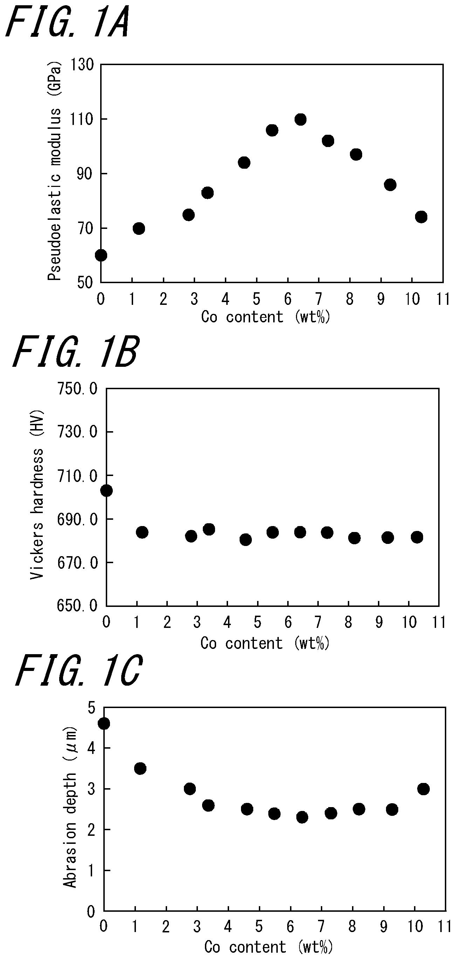

FIG. 1A illustrates a relationship between a Co content and a pseudoelastic modulus in a Ni-P-Co plating film, FIG. 1B illustrates a relationship between the Co content and a Vickers hardness in the Ni-P-Co plating film, and FIG. 1C illustrates a relationship between the Co content and an abrasion depth in the Ni-P-Co plating film, with respect to each Example and Comparative Example;

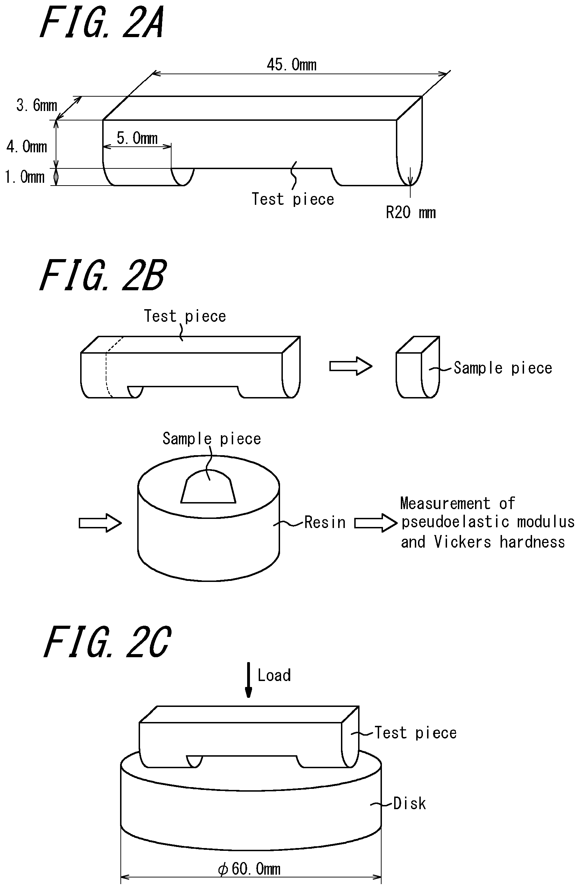

FIG. 2A is a schematic diagram for describing a 2-pin type test piece used in a friction and abrasion test, FIG. 2B is a schematic diagram for describing a sample piece, which has been cut out from the test piece, used for measurement of the pseudoelastic modulus and the hardness, and FIG. 2C is a schematic diagram for describing a 2-pin type pin-on-disk tester using the test piece.

### DETAILED DESCRIPTION

One embodiment of a sliding member of the present disclosure will be described below. The sliding member of the present embodiment includes a base material, an intermediate layer, and a Ni-P-Co plating film formed on the base material.

The base material in the present embodiment is pure aluminum or an aluminum alloy. Examples of the aluminum alloy include aluminum-based alloys such as 2000 series, 4000 series, 6000 series and 7000 series (JIS H 4000:2014), and high Si aluminum alloys such as ADC10, ADC12, ADC14 (JIS H 5302:2006) and A390 (made by Showa Denko K.K.). In addition, in a sliding member operating in a high temperature environment of approximately 150°C and in a high-load sliding environment, such as a sliding member in a rotary type compressor for a car air conditioner, or in a sliding member operating under a sliding environment of a high temperature and a high surface pressure, such as a sliding member used for a valve mechanism of an internal combustion engine, it is preferable to use a known rapidly-solidified aluminum alloy as the base material. The rapidly-solidified aluminum alloy contains a transition metal element such as Fe, Ni or Mn, and a large amount of Si, and accordingly has high strength and is resistant to a heat load. This rapidly-solidified aluminum alloy can be produced by using a known rapid solidification method. Specifically, firstly, an Al-Si-based molten alloy containing a transition metal element such as Fe, Ni or Mn and a large amount of Si is rapidly solidified by an atomizing method such as an air atomizing method, and the powder is obtained. Next, this powder is compression-molded into a green compact, and the green compact is solidified by a hot extrusion method to be an extruded material. Next, this extruded material is subjected to solution heat treatment and aging treatment. Thereby, the base material of an Al-Si based alloy having a Rockwell hardness adjusted to HRB 80 or higher is obtained.

The Ni-P-Co plating film in the present embodiment contains Co in the range of 3.4 mass% or more and less than 10.0 mass%. If the Co content is less than 3.4 mass% or 10.0 mass% or more, the elastic modulus of the film is low, and sufficient abrasion resistance as the sliding member cannot be obtained. As described above, in the present embodiment, it is important to control the Co content in the Ni-P-Co plating film to 3.4 mass% or more and less than 10.0 mass%. Specifically, in order to improve the abrasion resistance of the sliding member, it is insufficient to increase only the hardness of the film as in a conventional method, and it is important to enhance also the elastic modulus of the film. Then, due to the Co content in the film being adjusted to the above described range, the elastic modulus of the film increases, and, as a result, the abrasion resistance of the sliding member is improved, and accordingly a sliding member having excellent sliding characteristics is obtained. Incidentally, in order to further enhance the elastic modulus of the film, the Co content is preferably controlled to 4.6 mass% or more and 8.2 mass% or less, and is more preferably controlled to 5.5 mass% or more and 7.3 mass% or less.

The Ni-P-Co plating film in the present embodiment contains P in the range of 0.05 mass% or more and 5.0 mass% or less. If the P content is less than 0.05 mass%, the amount of the reducing agent in the plating liquid becomes insufficient, and accordingly the plating treatment becomes difficult. In addition, if the P content exceeds 5 mass%, the crystallinity of the film becomes amorphous, accordingly the hardness of the film remarkably lowers, and the sufficient abrasion resistance for the sliding member cannot be obtained. In addition, if the P content exceeds 5 mass%, abnormal abrasion occurs in the film due to an influence of primary crystal Si in the alloy, when the Al-Si based alloy is used as the base material.

The balance in the Ni-P-Co plating film in the present embodiment consists of Ni and unavoidable impurities. Examples of the unavoidable impurities include an element of the base material, which has eluted into the plating liquid, and contaminants in a chemical liquid which has been brought in from a pretreatment/cleaning step, and in a chemical raw material. Thus, in the present embodiment, B is not contained in the film. Specifically, B is not contained also in the reducing agent in the plating liquid, accordingly it becomes easy to control the plating liquid, in addition, defects in roughness is hard to occur on the surface of the sliding member when the sliding member is produced, and the sliding member having desired surface roughness can be stably obtained. Incidentally, in the Ni-P-Co plating film, hard particles can be dispersed.

Characteristics of the Ni-P-Co plating film in a sliding member of the present embodiment will be described below.

A Co content in the Ni-P-Co plating film is controlled to 3.4 mass% or more and less than 10.0 mass%, and thereby the elastic modulus of the Ni-P-Co plating film in the present embodiment can be controlled to 80 GPa or larger and 160 GPa or smaller, and more preferably to 80 GPa or larger and 120 GPa or smaller. By the elastic modulus of the film being controlled to 80 GPa or larger, it becomes possible to obtain the sufficient abrasion resistance as the sliding member. Incidentally, though the details will be described later, "elastic modulus" in the present specification means a pseudoelastic modulus which is measured with the use of a known nano-indentation method.

The Vickers hardness of the Ni-P-Co plating film in the present embodiment is HV 650 or higher and HV 850 or lower. As long as the Vickers hardness is HV 650 or higher, it is possible to obtain the sufficient abrasion resistance as the sliding member. In addition, if the Vickers hardness is HV 850 or lower, the film does not become brittle, and accordingly there is no possibility that the film is peeled off from the base material. Incidentally, the Ni-P-Co plating film of the present embodiment is based on a low P type Ni-P plating, and accordingly even if the plating film is not subjected to the heat treatment in a high temperature region of 200°C or higher, the hardness of HV 650 or higher and HV 850 or lower which is practically required is achieved.

The thickness of the Ni-P-Co plating film in the present embodiment is 3 µm or more and 30 µm or less. If the thickness is 3 µm or more, there is no possibility that the base material is exposed even though the sliding member is used for a long period of time. In addition, if the thickness is 30 µm or less, the deposition time period of the film in the plating treatment can be suppressed, and accordingly there is no possibility that the productivity is aggravated.

Next, the method for producing the sliding member of the present embodiment will be described, while taking the case where the Ni-P-Co plating film is produced by electroless Ni plating treatment as an example. Incidentally, the Ni-P-Co plating film of the present disclosure is not limited to the film produced by the electroless Ni plating treatment, but may be a film produced by known electrolytic Ni plating treatment, as long as the film satisfies the above described composition.

The sliding member of the present embodiment can be produced by forming the Ni-P-Co plating film on the base material by the electroless Ni plating treatment. According to the electroless Ni plating treatment, a film having uniform thickness can be formed, even when the base material has a complicated shape such as a vane for a rotary type compressor for a car air conditioner, and a valve retainer of a valve mechanism of an internal combustion engine. The electroless Ni plating treatment in the present embodiment can be performed by appropriately adjusting a Co concentration, a P concentration, and a Ni concentration in the plating liquid by a known method so that the Co content in the film becomes 3.4 mass% or more and less than 10.0 mass%, the P content becomes 0.05 mass% or more and 5.0 mass% or less, and the balance becomes Ni and unavoidable impurities. Incidentally, the treatment time period in the plating treatment can be appropriately adjusted so that the thickness of the film becomes 3 µm or more and 30 µm or less, and specifically is set preferably at 20 minutes to 3 hours.

In addition, it is preferable to perform the above described electroless Ni plating treatment after performing known double zincate treatment as pretreatment, from the viewpoint of improving the adhesion of the film. In the double zincate treatment, degreasing treatment, alkali etching treatment, mixed acid treatment, zinc substitution treatment, nitric acid treatment and zinc re-substitution treatment are performed in this order. Incidentally, Ni substitutes for zinc in the electroless Ni plating treatment after the pretreatment, and accordingly Zinc does not remain in the film.

The sliding member of the present embodiment can be produced by the above described method.

The sliding member of the present embodiment can be used, for example, as a sliding member provided in a compressor, and is useful particularly for a sliding member of which the sliding surface has a curvature as in the case of the vane of the compressor for the car air conditioner; and the abrasion resistance of the vane is further improved.

In addition, the sliding member of the present embodiment can also be used as a sliding member provided in the internal combustion engine, and is useful particularly for a sliding member having a complicated shape such as the valve retainer of the valve mechanism of the internal combustion engine. The valve mechanism of the internal combustion engine includes a valve spring, and a valve retainer having a sliding surface on which the valve spring slides. Here, generally, the valve retainer in which aluminum is used has a surface which has been subjected to hard alumite treatment, and the surface hardness becomes approximately HV 300. On the other hand, an iron-based material having a surface which has been subjected to nitriding treatment is used for the valve spring, and the surface hardness becomes approximately HV 1000. Due to this, when the valve spring and the valve retainer slide each other, such a circumstance occurs that the valve retainer wears, because the surface hardness of the valve retainer is lower than that of the valve spring. In the field of sport motor bicycles, in particular, there is a high demand for high-speed rotation of the engine, and the surface hardness of the valve spring tends to increase also in the future, and it is considered that the above described circumstance becomes tangible. In such a circumstance, if the sliding member of the present embodiment is used for the valve retainer, the abrasion resistance of the valve retainer is further improved.

However, the sliding member of the present embodiment is not limited to the vane of the compressor for the car air conditioner or the valve retainer of the valve mechanism of the internal combustion engine, as long as the sliding member is a machine part having a sliding portion.

The sliding member of the present disclosure has been described using the present embodiment as an example, but the present disclosure is not limited to the above described embodiment, and modifications can be appropriately made without departing from the scope defined by the claims.

In the present disclosure, an intermediate layer is provided between the base material and the Ni-P-Co plating film, for the purpose of preventing a plating liquid containing Co from being contaminated by an element contained in the base material when the plating treatment is applied to the base material. The intermediate layer is an inexpensive Ni-P plating film, which is produced by known electroless Ni plating treatment or electrolytic Ni plating treatment. The thickness of the intermediate layer is set at 1 µm or more and 5 µm or less.

In the case where the base material is heat-treatable like an aluminum alloy, the sliding member having the Ni-P-Co plating film formed thereon can be subjected to known heat treatment to promote a crystal growth in the film, and the hardness of the film can also be increased to HV 700 to 1000, as a result. The atmosphere of the heat treatment can be arbitrarily selected from air, an inert gas, a reducing gas and the like, in consideration of workability, cost and the like. It is necessary to consider the heat resistance of the base material and a required hardness for the film when the temperature of the heat treatment is adjusted, and it is preferable to set the temperature in a range of 150°C to 400°C. In the case where a heat treatment hardening type aluminum alloy is used as the base material, the temperature of the heat treatment is preferably set to be in a range of 150°C to 200°C so as not to significantly lower the strength of the base material. The time of the heat treatment can be appropriately determined in consideration of the temperature of the heat treatment, a desired hardness, the heat resistance of the base material, and the productivity, and is preferably set at 30 minutes or longer and 2 hours or shorter. Such heat treatment can be performed, for example, by immersing the sliding member in a silicone oil bath.

### EXAMPLES

### (Examples 1 to 7 and Comparative Examples 1 to 3)

Three 2-pin type of test pieces were prepared which had each the Ni-P-Co plating film formed on the base material by the electroless Ni plating treatment, as each of Examples 1 to 7 and Comparative Examples 1 to 3. Specifically, firstly, an extruded material was prepared by rapidly solidifying a molten metal of an Al-Si-based molten alloy containing a transition metal element by an air atomizing method to produce a powder, compression molding the obtained powder into a green compact by cold isostatic pressing, and solidifying the green compact by a hot extrusion method. This extruded material was subjected to solution heat treatment and aging treatment (T6) to adjust its hardness to HRB 95 to obtain the 2-pin type test piece (base material) illustrated in FIG. 2A was obtained. Here, the surface roughness of the test piece was controlled to Ra (JIS B 0601:2001) of 0.13 to 0.16 µm. For information, a curved surface having a curvature of R of 20 mm is formed in the test piece.

Next, the test piece was subjected to double zincate treatment, as the pretreatment. Specifically, an oil content which adheres to the surface of the test piece was removed with the use of an alkaline degreasing agent (UA-68: made by C.Uyemura & Co., Ltd.), and then an oxide film on the test piece was removed using an alkaline etching agent (AZ-102: made by C.Uyemura & Co., Ltd.). Furthermore, smut (Al(OH)₃ or the like) which was produced when the oxide film was removed was removed using an aqueous solution containing a desmutting agent (AZ-201: made by C.Uyemura & Co., Ltd.) and an aqueous nitric acid solution (SG=1.38). Next, the test piece was immersed in a zinc substitution liquid (LEA-10: made by C.Uyemura & Co., Ltd.), and a zinc film was formed on the surface of the test piece. Next, the test piece was immersed in the aqueous nitric acid solution (SG=1.38), and the zinc film was removed. Next, the test piece was immersed in the above described zinc substitution liquid again, and a zinc film was formed on the surface of the test piece.

Next, the test piece after the pretreatment was immersed in a medium P type Ni-P-based plating liquid (KTY-3 standard liquid: made by C.Uyemura & Co., Ltd.) at 90°C, and a Ni-P plating film (intermediate layer) having a thickness of 2 µm and a P content of 10 mass% was formed on the surface of the test piece, by electroless Ni plating treatment. Next, a test piece having an intermediate layer formed thereon was immersed in a plating liquid in which the Ni concentration, the P concentration and the Co concentration were appropriately adjusted by a known method so that the composition of the components of the film would become the composition illustrated in Table 1, and thereby a Ni-P-Co plating film having a thickness of 20 µm was formed on the intermediate layer. For information, the content of each element in Table 1 is obtained by the measurement of the obtained Ni-P-Co plating film with a fluorescent X-ray analysis method. In addition, in between each step of the pretreatment and the electroless Ni plating treatment, the surface of the test piece is sufficiently washed with water, and mixing of chemical liquids does not occur.

### (Comparative Example 4)

As for Comparative Example 4, a test piece pretreated in a similar method to the above described method was immersed in a plating liquid in which the Ni concentration and the P concentration were appropriately adjusted by a known method so that the composition of the components of the film would become the composition illustrated in Table 1. Thus, a Ni-P plating film having a thickness of 22 µm was formed by electroless Ni plating treatment.

### (Comparative Example 5)

As for Comparative Example 5, a test piece having an intermediate layer formed thereon in a similar method to the above described method was immersed in a plating liquid in which the Ni concentration, the P concentration and the B concentration were appropriately adjusted by a known method so that the composition of the components of the film would become the composition illustrated in Table 1. Thus, a Ni-P-B plating film having a thickness of 20 µm was formed by electroless Ni plating treatment.

### (Evaluation methods)

For each of Examples and Comparative Examples, a pseudoelastic modulus and a Vickers hardness of the film were measured. In addition, for each of Examples and Comparative Examples, the abrasion resistance of the test piece was evaluated.

### <Measurement of pseudoelastic modulus>

For each of Examples and Comparative Examples, the pseudoelastic modulus of the Ni-plating film was measured by a nano-indentation method. Specifically, the pseudoelastic modulus was calculated from a "load-displacement curve" which was obtained by pushing a triangular pyramidal diamond indenter (angle between edges of 115°) into the test piece mounted on a stage, with the use of a dynamic microhardness measuring apparatus (DUH-211, made by Shimadzu Corporation). Incidentally, the load was set at 490 mN, a load speed was set at 35.0 mN/s, a load retention time was set at 10 seconds, and an unloading retention time was set at 5 seconds. In addition, the elastic modulus of the diamond indenter was 1.14 GPa, and the Poisson's ratio thereof was 0.07. In addition, in the calculation of the pseudoelastic modulus, the Poisson's ratio of the test piece was set at 0.336. The measurement results are illustrated in Table 1 and FIG. 1A. Incidentally, as illustrated in FIG. 2B, a sample piece was obtained by cutting the test piece along a plane perpendicular to the longitudinal direction, then the sample piece was buried in a resin, the cross section was mirror polished, and the above described measurement was performed.

### <Measurement of Vickers hardness>

On each of Examples and Comparative Examples, the hardness of the Ni-plating film was measured with the use of a Vickers hardness tester (HM-220D: made by Mitutoyo Corporation). As for the measurement conditions, the load was set at 50 gf, and the load retention time was set at 30 seconds. The measurement results are illustrated in Table 1 and FIG. 1B. Incidentally, as illustrated in FIG. 2B, the test piece was cut out by cutting the test piece along the plane perpendicular to the longitudinal direction, and was buried in the resin, then the cross section was mirror polished, and then the Vickers hardness was measured.

### <Evaluation of abrasion resistance>

Abrasion resistance of each of Examples and Comparative Examples was evaluated with the use of a 2-pin type pin-on-disc tester illustrated in FIG. 2C. Specifically, the surface of the test piece with R of 20 mm was pushed onto a disc which rotated at 6 m/s, with a load of 700 N for 30 minutes, then the abrasion depth of the surface of the test piece with the R of 20 mm was measured, and thereby the abrasion resistance was evaluated. The evaluation results are illustrated in Table 1 and FIG. 1C. It can be determined that the smaller the abrasion depth is, the more excellent the abrasion resistance is. For information, the disc illustrated in FIG. 2C uses an A390 material of 14% Si, and the surface roughness has Rz (JIS B 0601:1982) of 2.0 µm. In addition, during the test, a known refrigerating machine oil was added from a dropping nozzle (not illustrated) dropwise onto the contact surface between the test piece and the disc, at 5 ml/min.

**[Table 1]**

| Classification | Alloy system of Ni plating film | Component composition (mass%) | | | Evaluation results | | |
|---|---|---|---|---|---|---|---|
| | | Co | P | B | Vickers hardness (HV) | Pseudoelastic modulus (GPa) | Abrasion depth (µm) |
| Comparative Example 1 | Ni-P-Co | 1.2 | 1.8 | 0.0 | 683.8 | 70 | 3.5 |
| Comparative Example 2 | Ni-P-Co | 2.8 | 1.4 | 0.0 | 682.2 | 75 | 3.0 |
| Example 1 | Ni-P-Co | 3.4 | 1.5 | 0.0 | 685.3 | 83 | 2.6 |
| Example 2 | Ni-P-Co | 4.6 | 1.5 | 0.0 | 681.5 | 94 | 2.5 |
| Example 3 | Ni-P-Co | 5.5 | 1.6 | 0.0 | 683.8 | 106 | 2.4 |
| Example 4 | Ni-P-Co | 6.4 | 1.4 | 0.0 | 683.8 | 110 | 2.3 |
| Example 5 | Ni-P-Co | 7.3 | 1.4 | 0.0 | 684.7 | 102 | 2.4 |
| Example 6 | Ni-P-Co | 8.2 | 1.4 | 0.0 | 682.2 | 97 | 2.5 |
| Example 7 | Ni-P-Co | 9.3 | 1.2 | 0.0 | 681.5 | 86 | 2.5 |
| Comparative Example 3 | Ni-P-Co | 10.3 | 1.5 | 0.0 | 681.5 | 74 | 3.0 |
| Comparative Example 4 | Ni-P | 0.0 | 1.5 | 0.0 | 703.7 | 60 | 4.6 |
| Comparative Example 5 | Ni-P-B | 0.0 | 1.42 | 0.08 | 719.5 | 108 | 3.0 |

| | | | | | | | |
|---|---|---|---|---|---|---|---|
| The balance other than the above component composition is Ni and unavoidable impurities. | | | | | | | |

### (Description of evaluation results)

As illustrated in Table 1 and FIG. 1B, the Co content in the film did not affect the Vickers hardness, and in any of Examples 1 to 7 and Comparative Examples 1 to 3, the Vickers hardness was approximately HV 680 to 685 and was almost constant. However, in Comparative Examples 1, 2 and 4 in which the Co content was less than 3.4 mass% and in Comparative Example 3 in which the Co content was 10.0 mass% or more, the pseudoelastic modulus was smaller than 80 GPa, as illustrated in FIG. 1A, and accordingly the abrasion depth was 3.0 µm or more as illustrated in FIG. 1C, and adequate abrasion resistance could not be obtained. On the other hand, in Examples 1 to 7 in which the Co content was 3.4 mass% or more and less than 10.0 mass%, the pseudoelastic modulus was 80 GPa or larger as illustrated in FIG. 1A, and accordingly the abrasion depth could be suppressed to less than 3.0 µm as illustrated in FIG. 1C. Furthermore, in Examples 3 to 5 in which the Co content was 5.5 mass% or more and 7.3 mass% or less, the pseudoelastic modulus was 100 GPa or larger, and accordingly the abrasion depth could be suppressed to 2.5 µm or less, and the abrasion resistance was more remarkably improved. From the results, it is understood that in order to improve the sliding characteristics of the sliding member, specifically, the abrasion resistance thereof, it is insufficient to pay attention only to the hardness of the film, and it is important to pay attention also to the elastic modulus of the film. Incidentally, even in Comparative Example 5 including B, which is generally considered to have high hardness and be excellent in abrasion resistance, the abrasion depth was 3.0 µm as illustrated in Table 1, and the abrasion resistance was inferior to those in Examples 1 to 7. This reason is assumed to be that in Comparative Example 5, two types of reducing agents are used which are a P-type reducing agent and a B-type reducing agent, and accordingly the types of unavoidable impurities in the film are various in comparison with those in the Ni-P-Co plating film, which affects the abrasion resistance.

### INDUSTRIAL APPLICABILITY

The sliding member according to the present disclosure can be applied to: a vane, a rotor and a cylinder of a compressor part; a shift transmission clutch, an automatic transmission and a gear of a power transmission part; a piston ring, a piston rod, a cam shaft, a valve retainer and a valve of an engine part; a spherical bearing of a bearing part; tools; and the like.

## Claims

1. A sliding member comprising: a base material; a Ni-P plating film formed on the base material; and a Ni-P-Co plating film formed on the Ni-P plating film, wherein
the base material is aluminum or an aluminum alloy, or is an Al-Si based alloy containing a transition metal element and having a Rockwell hardness of HRB 80 or higher,
the Ni-P plating film has a thickness of 1 µm or more and 5 µm or less, and
the Ni-P-Co plating film has a thickness of 3 µm or more and 30 µm or less and contains 3.4 mass% or more and less than 10.0 mass% Co and 0.05 mass% or more and 5.0 mass% or less P, with the balance being Ni and unavoidable impurities.

2. The sliding member according to claim 1, wherein the Ni-P-Co plating film has an elastic modulus of 80 GPa or larger and 160 GPa or smaller.

3. The sliding member according to claim 1 or 2, wherein the Ni-P-Co plating film has a Vickers hardness of HV 650 or higher and HV 850 or lower.

4. The sliding member according to any one of claims 1 to 3, being a vane for a compressor.

5. The sliding member according to any one of claims 1 to 3, being a valve retainer of a valve mechanism of an internal combustion engine.

## Patentansprüche

1. Gleitelement, das umfasst: ein Basismaterial; einen Ni-P-Plattierungsfilm, der auf dem Basismaterial gebildet ist; und einen Ni-P-Co-Plattierungsfilm, der auf dem Ni-P-Plattierungsfilm gebildet ist, wobei
das Basismaterial Aluminium oder eine Aluminiumlegierung oder eine Legierung auf Al-Si-Basis ist, die ein Übergangsmetallelement enthält und eine Rockwell-Härte von HRB 80 oder höher aufweist,
der Ni-P-Plattierungsfilm eine Dicke von 1 µm oder mehr und 5 µm oder weniger aufweist, und
der Ni-P-Co-Plattierungsfilm eine Dicke von 3 µm oder mehr und 30 µm oder weniger aufweist und 3,4 Massen-% oder mehr und weniger als 10,0 Massen-% Co und 0,05 Massen-% oder mehr und 5,0 Massen-% oder weniger P enthält, wobei der Rest Ni und unvermeidliche Verunreinigungen sind.

2. Gleitelement nach Anspruch 1, wobei der Ni-P-Co-Plattierungsfilm einen Elastizitätsmodul von 80 GPa oder mehr und 160 GPa oder weniger aufweist.

3. Gleitelement nach Anspruch 1 oder 2, wobei der Ni-P-Co-Plattierungsfilm eine Vickershärte von HV 650 oder höher und HV 850 oder niedriger aufweist.

4. Gleitelement nach einem der Ansprüche 1 bis 3, das eine Schaufel für einen Kompressor ist.

5. Gleitelement nach einem der Ansprüche 1 bis 3, das ein Ventilteller eines Ventilmechanismus eines Verbrennungsmotors ist.

## Revendications

1. Élément coulissant comprenant : un matériau de base ; un film de placage en Ni-P formé sur le matériau de base; et un film de placage en Ni-P-Co formé sur le film de placage en Ni-P, dans lequel
le matériau de base est en aluminium ou en alliage d'aluminium, ou est en un alliage à base de Al-Si contenant un élément métal de transition et ayant une dureté de Rockwell de 80 HRB ou plus,
le film de placage en Ni-P a une épaisseur de 1 µm ou plus et de 5 µm ou moins, et
le film de placage en Ni-P-Co a une épaisseur de 3 µm ou plus et de 30 µm ou moins et contient 3,4 % en masse ou plus et moins de 10,0 % en masse de Co, 0,05 % en masse ou plus et 5,0 % en masse ou moins de P, le reste étant du Ni et des impuretés inévitables.

2. Élément coulissant selon la revendication 1, dans lequel le film de placage en Ni-P-Co a un module élastique de 80 GPa ou plus et de 160 GPa ou moins.

3. Élément coulissant selon la revendication 1 ou 2, dans lequel le film de placage en Ni-P-Co a une dureté Vickers de 650 HV ou plus et de 850 HV ou moins.

4. Élément coulissant selon l'une quelconque des revendications 1 à 3, qui est une aube pour un compresseur.

5. Élément coulissant selon l'une quelconque des revendications 1 à 3, qui est un dispositif de retenue de soupape d'un mécanisme de soupape d'un moteur à combustion interne.
